# EUROPÄISCHE PATENTANMELDUNG

(11) **EP 4 184 759 A1**
(43) Veröffentlichungstag der Anmeldung: **24.05.2023**
(21) Anmeldenummer: 21209564.0
(22) Anmeldetag: 22.11.2021
(51) Int. Cl.: H02K 3/50, B33Y 10/00, H02K 11/33

(54) **STATOR, ELEKTRISCHE MASCHINE UND HERSTELLUNGSVERFAHREN**

(71) Anmelder: Siemens Aktiengesellschaft, 80333 München (DE)
(72) Erfinder: Richter, Johannes, 90768 Fürth (DE); Weidermann, Christian, 07381 Pößneck (DE)
(74) Vertreter: Siemens Patent Attorneys

(57) **Zusammenfassung**

Es wird ein Stator (10) für eine elektrische Maschine (1) angegeben, umfassend
- eine Statorwicklung (11) mit einer Mehrzahl von Leiterstäben (13),
- wenigstens ein leistungselektronisches Bauelement (25), welches in den Stator (10) integriert ist
- und wenigstens ein Anschlusselement (15a,15b), durch welches entweder ein zugeordneter Leiterstab (13) mit einem zugeordneten leistungselektronischen Bauelement (25) elektrisch verbunden ist oder durch welches mehrere Leiterstäbe (13) untereinander elektrisch verbunden sind,
- wobei das Anschlusselement (15a,15b) aus einem elektrisch leitfähigen Material gebildet ist und mit einem additiven Herstellungsverfahren hergestellt ist.

Weiterhin wird eine elektrische Maschine (1) mit einem solchen Stator (10) sowie ein Verfahren zur Herstellung eines solchen Stators (10) angegeben.

## Beschreibung

Die vorliegende Erfindung betrifft einen Stator für eine elektrische Maschine mit einer Statorwicklung mit einer Mehrzahl von Leiterstäben und mit einem Anschlusselement, durch welches die Leiterstäbe elektrisch angebunden sind. Weiterhin betrifft die Erfindung eine elektrische Maschine mit einem solchen Stator sowie ein Herstellungsverfahren für einen solchen Stator.

Bei der Entwicklung elektrischer Maschinen stellt die Erreichung immer höherer Leistungsdichten ein wichtiges Ziel dar. Typische rotierende Maschinen weisen einen Stator und einen im Verhältnis dazu drehbar gelagerten Rotor auf. Dieser grundlegende Aufbau kommt sowohl in Synchronmaschinen als auch in Asynchronmaschinen zum Einsatz. Im Stator ist meist eine Statorwicklung angeordnet, welche in die Nuten eines Statorblechpakets eingelegt ist. Häufig handelt es sich dabei um verteilte Wicklungen. Eine solche verteilte Wicklung kann grundsätzlich entweder aus einem langen zusammenhängenden Leiter gewickelt werden oder sie kann durch nachträgliches elektrisches Verbinden von einzelnen Leitersegmenten aufgebaut werden. Bei der letztgenannten Variante können insbesondere vergleichsweise starre Stäbe zum Einsatz kommen, welche in die axial verlaufenden Nuten des Jochs eingelegt und nachträglich miteinander verbunden werden können. Dabei kann es sich entweder um einzelne, langgestreckte axiale Stäbe handeln, von denen jeweils zwei zu einer Windung zusammengesetzt werden, oder um haarnadelartig gebogene Stäbe, von denen bereits jeder Haarnadelstab eine vollständige Windung bildet.

Vor allem bei Maschinen mit hoher Leistungsdichte ist die Statorwicklung häufig mit ein oder mehreren leistungselektronischen Bauelementen ausgestattet, beispielsweise mit Frequenzumrichtern, durch die die Statorwicklung bestromt werden kann. Bei herkömmlichen elektrischen Maschinen sind solche Umrichter meist außerhalb der Maschine angeordnet, beispielsweise in einem Schaltschrank in einem getrennten Raum oder zumindest in einem getrennten Gehäuse. Bei einem Motor wird eine hohe Leistungsdichte meist dadurch erreicht, dass die Statorwicklung mit einem vergleichsweise niedrigen Strom und einer Spannung im Hochspannungsbereich gespeist wird. Zwischen dem externen Umrichter und der Statorwicklung sind Anschlussleitungen vorgesehen, welche dann entsprechend als relativ lange, dicke und nach außen hin elektrisch isolierte Leitungen ausgebildet sind. Die Verbindung dieser Leitungen mit der elektrischen Maschine erfolgt beispielsweise über einen Klemmkasten, welcher auf einer Seite mit den Anschlussleitungen und auf der anderen Seite mit der Statorwicklung verbunden ist. Die elektrischen Verbindungen können dann über Klemmverbindungen mit einer Crimp-Hülse geschaffen werden. Alternativ können für die Anbindung der Statorwicklung an den externen Umrichter aber auch Lötverbindungen eingesetzt werden. Diese Verbindungstechniken eignen sich vor allem dann, wenn die Betriebsspannungen relativ hoch und die Betriebsströme relativ niedrig sind. Die Strombelastbarkeit der Anschlussleitungen muss dann nicht besonders hoch sein, es müssen nur Spannungsüberschläge durch eine geeignete Isolation verhindert werden.

Nachteilig bei diesen herkömmlichen elektrischen Maschinen ist, dass durch die von der Maschine räumlich getrennte Anordnung der Leistungselektronik relativ viel Bauraum benötigt wird. Außerdem können bei hohen Leistungsbereichen auch relativ hohe elektrische Verluste im Bereich der langen Anschlussleitungen auftreten. Es gibt daher Bestrebungen, hochintegrierte elektrische Maschinen zu entwickeln, bei denen ein oder mehrere leistungselektronische Bauelemente zusammen mit den übrigen Teilen der Maschine in einem gemeinsamen Gehäuse integriert sind. Beispielsweise kann die Leistungs-elektronik für die Bestromung der Statorwicklung im Bereich des Stators angeordnet sein. Die verlustarme Anbindung der Leistungselektronik an die Statorwicklung stellt jedoch auch hier ein Problem dar. Vor allem bei sehr hohen Leistungsdichten und insbesondere bei vergleichsweise hohen Strömen sind die elektrischen Verluste in herkömmlichen Crimpverbindungen vergleichsweise hoch.

Aufgabe der Erfindung ist es daher, einen Stator für eine elektrische Maschine anzugeben, welcher die genannten Nachteile überwindet. Insbesondere soll ein Stator zur Verfügung gestellt werden, welcher mit einer hohen Leistungsdichte betrieben werden kann und der gleichzeitig relativ kompakt ausgebildet ist und möglichst geringe Verluste im Bereich der elektrischen Anschlüsse der Statorwicklung aufweist. Eine weitere Aufgabe ist es, eine elektrische Maschine mit einem solchen Stator sowie ein Verfahren zur Herstellung eines solchen Stators anzugeben.

Diese Aufgaben werden durch den in Anspruch 1 beschriebenen Stator, die in Anspruch 10 beschriebene elektrische Maschine und das in Anspruch 11 beschriebene Herstellungsverfahren gelöst.

Der erfindungsgemäße Stator ist als Stator für eine elektrische Maschine ausgelegt. Er umfasst eine Statorwicklung mit einer Mehrzahl von Leiterstäben und wenigstens ein leistungselektronisches Bauelement, welches in die elektrische Maschine integriert ist. Weiterhin umfasst er wenigstens ein Anschlusselement, durch welches entweder ein zugeordneter Leiterstab mit einem zugeordneten leistungselektronischen Bauelement elektrisch verbunden ist oder durch welches mehrere Leiterstäbe untereinander elektrisch verbunden sind. Dabei ist das Anschlusselement aus einem elektrisch leitfähigen Material gebildet und mit einem additiven Herstellungsverfahren hergestellt.

Bei der Statorwicklung soll es sich also um die feststehende Wicklung einer elektrischen Maschine handeln. Sie ist hier als sogenannte Stabwicklung ausgeführt, also mit anderen Worten aus einzelnen Leiterstäben zusammengesetzt. Diese Leiterstäbe können insbesondere in die Nuten eines Statorblechpakets eingebettet sein und sich im Wesentlichen in axialer Richtung erstrecken, wobei die axiale Richtung bezüglich einer Hauptachse des Stators definiert ist, welche zweckmäßigerweise der Rotationsachse der elektrischen Maschine entspricht. Die einzelnen Leiterstäbe können unterschiedlich ausgestaltet sein, z.B. als massive Stäbe, als Hohlstäbe oder auch als zusammengesetzte Stäbe. Wesentlich ist vor allem, dass es sich um mechanisch eigenstabile Stäbe handelt, welche so starr sind, dass sie nicht wie ein herkömmlicher Draht durch nachträgliches Verformen zu einer verteilten Statorwicklung im klassischen Sinne "aufgewickelt" werden. Stattdessen sind die Leiterstäbe relativ starre und gerade Leiterelemente, welche in die axialen Statornuten eingeschoben werden und insbesondere anschließend in ihren axialen Endbereichen zu der übergeordneten Statorwicklung verbunden werden. Es handelt sich daher nur elektrisch gesehen um eine "Wicklung", die aber nicht in klassischer Weise durch Wickeln eines Leiters, sondern durch nachträgliches Verbinden von stabförmigen Elementen erzeugt worden ist. Ein wesentlicher Vorteil einer solchen Stabwicklung ist, dass die Wickelköpfe häufig wesentlich kompakter ausgeführt werden können als bei einer "gewickelten Drahtwicklung", da in den axialen Endbereichen der Wicklung keine ausladenden Leiterschleifen mit großen Biegeradien vorgesehen werden müssen, sondern die elektrischen Verbindungen durch separate Verbindungselemente bereitgestellt werden, bei denen durch die nachträgliche Anbringung an den Stabenden auch eher kleinräumige Richtungswechsel toleriert werden können. Der Platzbedarf für die voluminösen Wickelköpfe von herkömmlichen Drahtwicklungen kann damit weitgehend eingespart werden. Unter Umständen können die Wickelköpfe sogar ganz entfallen, nämlich dann, wenn die einzelnen Stäbe einer Stabwicklung keine zusammenhängende verteilte Wicklung darstellen, sondern z.B. einzeln mit leistungselektronischen Bauelementen verbunden sind. Die Windungszahl pro Leiterstab kann allgemein beispielsweise bei 0,5 liegen, so dass jeweils zwei Leiterstäbe zusammen eine Windung der Statorwicklung ausbilden.

Es soll zumindest ein leistungselektronisches Bauelement in die elektrischen Maschine integriert sein, also z.B. ein Umrichter zur Bestromung der Statorwicklung oder ein anderes leistungselektronisches Bauelement, welches für den elektrischen Betrieb der Statorwicklung eingesetzt wird. Unter der beschriebenen "Integration in die elektrische Maschine" soll hierbei verstanden werden, dass das leistungselektronische Bauelement mit der Statorwicklung und den übrigen Teilen des Stators eine übergeordnete fest verbundene Baueinheit bildet und nicht als externe Einheit mit außenliegenden Kabeln an die Maschine angeschlossen wird. Das Bauelement ist damit also im Bereich des Stators der Maschine integriert. Das leistungselektronische Bauelement kann dazu insbesondere im Inneren eines Statorgehäuses angeordnet sein, welches die Statorwicklung und andere Teile des Stators umgibt und vor Umwelteinflüssen schützt. Dies muss aber nicht zwangsläufig der Fall sein: So kann beispielsweise auch nur der elektrisch wirksame Teil der Statorwicklung von einem solchen Statorgehäuse umgeben sein, und das leistungselektronische Bauelement (oder ggf. die Mehrzahl davon) kann z.B. um einige Zentimeter bis einige 10 Zentimeter axial versetzt zu diesem Statorgehäuse angeordnet sein und über das starre Anschlusselement mit der Wicklung verbunden sein, wobei trotzdem mit den übrigen Teilen des Stators eine fest verbundene, übergeordnete funktionale Einheit gebildet wird. Auch diese Variante soll ein in den Stator integriertes Bauelement im Sinne der vorliegenden Erfindung darstellen.

Gemäß einer ersten Variante des erfindungsgemäßen Stators bildet das Anschlusselement eine elektrische Verbindung zwischen einem zugeordneten Leiterstab und einem zugeordneten leistungselektronischen Bauelement aus. So kann insbesondere jedem vorhandenen Leiterstab genau ein Anschlusselement zugeordnet sein, welches diesen Leiterstab in einem ersten axialen Endbereich des Stators mit einem oder mehreren leistungselektronischen Bauelementen elektrisch verbindet. Dieses Anschlusselement kann insbesondere direkt mit dem Leiterstab verbunden sein, also ohne weitere Zwischenelemente. Der erste axiale Endbereich kann entsprechend auch als "Elektronik-Seite" bezeichnet werden.

Gemäß der zweiten Variante des erfindungsgemäßen Stators bildet das Anschlusselement eine Verbindung zwischen einer Mehrzahl von Leiterstäben aus. Dabei können beispielsweise Paare oder größere Gruppen von Leiterstäben über ein dem Paar bzw. der Gruppe zugeordnetes Anschlusselement zu einer übergeordneten Windung verbunden sein. Es können aber auch größere Anzahlen von Leiterstäben (und insbesondere sogar alle Leiterstäbe der Wicklung) über einen Kurzschlussring verbunden sein. Auf diese Weise kann beispielsweise eine Sternpunktschaltung realisiert sein, bei der mehrere Stränge einer Wechselstrom-Wicklung in einem zentralen Punkt - dem Sternpunkt - elektrisch miteinander verbunden sind. Der Kurzschlussring schließt den elektrischen Kreis, so dass die Summe alle Statorströme Null ergibt. Allgemein und unabhängig von der Geometrie des Anschlusselements und der Anzahl der darüber verbunden Leiterstäbe kann bei dieser Variante das Anschlusselement in einem zweiten axialen Endbereich des Stators angeordnet sein, welcher der sogenannten Elektronik-Seite gegenüberliegt. Dieser zweite axiale Endbereich kann dann insbesondere frei von leistungselektronischen Bauelementen sein und vor allem der elektrischen Verbindung der Leiterstäbe untereinander dienen.

Den beiden beschriebenen Varianten ist gemeinsam, dass zumindest ein Anschlusselement vorliegt, welches zur elektrischen Anbindung eines zugeordneten Leiterstabs dient - nämlich entweder an einen oder mehrere andere Leiterstäbe oder aber an die Leistungs-Elektronik. Es können auch mehrere Anschlusselemente vorliegen, wobei dann insbesondere auch beide Typen vertreten sein können. Wesentlich für die vorliegende Erfindung ist, dass das wenigstens eine Anschlusselement durch ein additives Herstellungsverfahren aus einem leitfähigen Material gebildet ist. Insbesondere soll es sich dabei um ein lagenbasiertes additives Herstellungsverfahren handeln, wobei die dem Verfahren zugrundeliegende Lagenstruktur auch an dem fertigen Anschlusselement erkennbar bleibt. Ein wesentlicher Vorteil eines solchen additiv gefertigten Anschlusselements ist, dass damit eine große Vielfalt an geometrischen Formen ermöglicht wird, was insbesondere eine kompakte elektrische Anbindung der Leiterstäbe (an die Leistungselektronik bzw. aneinander) erlaubt. Die Herstellung des Anschlusselements ist dabei vergleichsweise einfach und kann auch *in situ* erfolgen, also insbesondere durch additiven Aufbau des Anschlusselements neben den bereits in die Nuten eingelegten Leiterstäben. Dabei kann der Stator für einen vergleichsweise hohen Leistungsbereich ausgelegt sein, und die elektrischen Verluste dieser elektrischen Anbindungen können vorteilhaft niedrig gehalten werden. Dies kann insbesondere dadurch ermöglicht werden, dass die übergeordnete Statorwicklung nicht wie herkömmliche Wicklungen bei hohen Spannungen und eher niedrigen Strömen, sondern umgekehrt bei vergleichsweise niedriger Spannung und hohen Strömen betrieben wird. Entsprechend ist das jeweilige Anschlusselement vorteilhaft für einen Betrieb bei einem relativ hohen Betriebsstrom ausgelegt. Hierzu wird die elektrisch wirksame Länge des Anschlusselements vorteilhaft relativ gering gehalten, und der Querschnitt und die Leitfähigkeit des Materials können vergleichsweise hoch sein, um eine hohe Strombelastbarkeit zu erreichen. Diese vorteilhaften Ausgestaltungen sind Gegenstand der Unteransprüche. Die Erfindung beruht auf der Erkenntnis, dass auch mit additiv gefertigten leitfähigen Anschlusselementen vergleichsweise hohe Strombelastbarkeiten erreicht werden können.

Die erfindungsgemäße elektrische Maschine weist einen erfindungsgemäßen Stator auf. Zweckmäßig weist eine solche Maschine zusätzlich einen relativ zu dem Stator drehbar gelagerten Rotor auf. Die Vorteile der elektrischen Maschine ergeben sich analog zu den beschriebenen Vorteilen des erfindungsgemäßen Stators.

Das erfindungsgemäße Verfahren dient zur Herstellung eines Stators für eine elektrische Maschine. Dabei weist der Stator eine Statorwicklung mit einer Mehrzahl von Leiterstäben auf und wenigstens ein leistungselektronisches Bauelement, welches in den Stator integriert ist. Weiterhin weist der Stator wenigstens ein Anschlusselement auf, durch welches entweder ein zugeordneter Leiterstab mit einem zugeordneten leistungselektronischen Bauelement elektrisch verbunden ist oder durch welches mehrere Leiterstäbe untereinander elektrisch verbunden sind.

Das Verfahren weist zumindest den folgenden Schritt auf: a) Herstellung des Anschlusselements durch ein additives Herstellungsverfahren aus einem elektrisch leitfähigen Material. Die Vorteile des erfindungsgemäßen Verfahrens ergeben sich analog zu den oben beschriebenen Vorteilen des erfindungsgemäßen Stators.

Vorteilhafte Ausgestaltungen und Weiterbildungen der Erfindung gehen aus den von den Ansprüchen 1 und 11 abhängigen Ansprüchen sowie der folgenden Beschreibung hervor. Dabei können die beschriebenen Ausgestaltungen des Stators, der elektrischen Maschine und des Herstellungsverfahrens allgemein vorteilhaft miteinander kombiniert werden.

So kann gemäß einer allgemein vorteilhaften Ausführungsform das Anschlusselement im Wesentlichen aus Kupfer oder einer kupferhaltigen Legierung gebildet sein. Es hat sich nämlich gezeigt, dass mit einem solchen kupferbasierten Material auch über ein additives Fertigungsverfahren eine hohe spezifische Leitfähigkeit erreicht werden kann, die einen Stromfluss über die Statorwicklung (und entsprechend über das wenigstens eine Anschlusselement hinweg) auch bei vergleichsweise hohen Strömen mit geringen elektrischen Verlusten ermöglicht. Bei Verwendung einer kupferhaltigen Legierung kann Kupfer insbesondere den Hauptbestandteil bilden. Alternativ zu einem solchen kupferbasierten Material kann das Anschlusselement aber auch prinzipiell aus einem anderen hoch leitfähigen Material und insbesondere aus einem Metall additiv gefertigt sein, beispielsweise aus Aluminium oder einer aluminiumhaltigen Legierung.

Allgemein vorteilhaft kann das Material des Anschlusselements eine spezifische Leitfähigkeit von wenigstens 50 MS/m, bevorzugt wenigstens 55 MS/m und besonders bevorzugt etwa 58 MS/m aufweisen. Diese Werte sollen insbesondere für das additiv gefertigte Anschlusselement in seiner jeweiligen Geometrie als effektiver Leitfähigkeitswert ergeben, beispielsweise als effektive spezifische Leitfähigkeit bei Raumtemperatur. Falls die Leitfähigkeit im additiv gefertigten Element aufgrund der Lagenstruktur anisotrop ist, dann soll unter dieser "effektiven spezifischen Leitfähigkeit" diejenige spezifische Leitfähigkeit verstanden werden, die bei einem isotropen Material bei derselben Geometrie zu demselben elektrischen Widerstand über die elektrisch wirksame Länge des Anschlusselements (so wie es an die Wicklung angeschlossen ist) führen würde. Hohe elektrische Leitfähigkeiten in den genannten Bereichen können mit verschiedenen additiven Fertigungsverfahren erreicht werden. So sind beispielsweise mit Kaltgasspritzen und auch mit selektivem Laserschmelzen spezifische Leitfähigkeiten in der Nähe von sogenanntem Elektrokupfer erreicht worden. Die spezifische Leitfähigkeit kann also beispielsweise zwischen 50 MS/m und 58 MS/m liegen. So können die elektrischen Verluste in dem Anschlusselement vorteilhaft gering gehalten werden, insbesondere wenn die elektrische Länge entsprechend kurz und der Querschnitt entsprechend hoch ist. So kann die axiale Länge l des Anschlusselements beispielsweise zwischen 20 mm und 150 mm liegen. Die Höhe h des Anschlusselements (in radialer Richtung) kann beispielsweise zwischen 25 mm und 100 mm liegen, und die Breite b des Anschlusselements (in azimutaler Richtung) kann beispielsweise zwischen 7 mm und 20 mm liegen, so dass sich abhängig von der jeweiligen Formgebung eine effektive elektrische Querschnittsfläche (ggf. nach Abzug von offenen Strukturen wie Kühlmittelkanälen) von zumindest einigen Quadratzentimetern ergibt.

Allgemein vorteilhaft kann das wenigstens eine Anschlusselement eine Strombelastbarkeit von wenigstens 600 A aufweisen. Mit anderen Worten kann das Anschlusselement beim Betrieb des Stators dauerhaft einen solchen Strom führen, ohne dabei thermisch beschädigt zu werden. Das Anschlusselement ist damit für einen Betrieb der Statorwicklung bei vergleichsweise hohem Nutstrom ausgelegt, wodurch auch bei vergleichsweise niedriger Betriebsspannung eine hohe Leistung erreicht werden kann. Die vorgesehene Betriebsspannung kann dabei beispielsweise bei 100 V oder weniger liegen. Im Vergleich zu höheren Betriebsspannungen kann dabei die Isolation der stromführenden Elemente deutlich weniger aufwändig ausgeführt werden oder sogar ganz entfallen. So kann im Vergleich zu herkömmlichen Wicklungen viel Platz eingespart werden, der nicht für dicke Isolationen vorgesehen werden muss, sondern stattdessen von stromführenden Elementen (also z.B. den Leiterstäben und Anschlusselementen) ausgefüllt werden kann. Dies gilt vor allem für die axialen Endbereiche, aber auch für den innenliegenden Teil der Statorwicklung. Insgesamt wird dadurch eine vergleichsweise kompakte Wicklung erhalten.

Gemäß einer vorteilhaften Ausführungsform kann das wenigstens eine leistungselektronische Bauelement ein Stromrichter sein. Insbesondere kann es sich dabei um einen Umrichter handeln, beispielsweise einen Frequenz-Umrichter. Alternativ kann es sich bei dem Bauelement aber auch um einen Stromsteller (insbesondere einen DC-DC-Wandler) oder einen Wechselrichter handeln oder es kann auch eine Kombination von mehreren der genannten Bauelemente vorliegen, wobei gleiche und/oder unterschiedliche Typen miteinander kombiniert werden können. Dabei können die einzelnen leistungselektronischen Bauelemente vorteilhaft als Teile von Halb- und/oder Vollbrücken-Schaltungen angeordnet sein. Die einzelnen leistungselektronischen Bauelemente können beispielsweise auf Galliumnitrid- oder Siliziumcarbid-Halbleiter-Technologie basieren. Allgemein vorteilhaft können jedem der vorliegenden Leiterstäbe ein oder mehrere leistungselektronische Bauelemente zugeordnet sein, welche über ein zugeordnetes additiv gefertigtes Anschlusselement mit dem jeweiligen Leiterstab elektrisch verbunden sind. Der jeweilige Stromrichter kann vorteilhaft dazu ausgelegt sein, den zugeordneten Leiterstab mit einem Strom von wenigstens 600 A zu beaufschlagen. Dies kann gegebenenfalls auch durch eine Verschaltung von mehreren Stromrichtern pro Leiterstab erreicht werden.

Die Leiterstäbe des Stators können gemäß einer ersten Ausführungsvariante als Massivleiter und insbesondere als einstückige Massivleiter ausgestaltet sein. Insbesondere kann dann jede Nut des Statorblechpakets einen solchen Massivleiter aufweisen und mit diesem im Wesentlichen ausgefüllt sein. Der Massivleiter weist dabei keine innenliegenden Hohlräume auf.

Alternativ zu der massiven Variante können manche der Leiterstäbe oder auch alle Leiterstäbe als Hohlleiter ausgeführt sein. Dies kann vor allem dann zweckmäßig sein, wenn der Stator eine Kühlvorrichtung aufweist, mit der ein fluides Kühlmittel durch das Innere solcher Hohlleiter zirkuliert werden kann, um die Statorwicklung auf diese Weise zu entwärmen. Bei dieser Ausführungsform ist es besonders vorteilhaft, wenn auch das jeweils zugeordnete additiv gefertigte Anschlusselement einen entsprechenden innenliegenden Kanal (oder auch mehrere solche Kanäle) aufweist, der mit dem Inneren des Hohlleiters fluidisch verbunden ist, um in einem übergeordneten Kreislauf Kühlmittel in diesen einzuleiten oder aus diesem herauszuleiten.

Alternativ zu der einstückigen Variante können die Leiterstäbe auch als geteilte Leiter ausgestaltet sein, wobei die einzelnen Leiterstäbe dann aus einzelnen Teilleitern zusammengesetzt sind. Diese einzelnen Teilleiter können optional durch eine dünne Isolationsschicht elektrisch gegeneinander isoliert sein, dies ist aber nicht zwingend erforderlich. Beispielsweise kann ein zusammengesetzter Leiterstab durch eine Mehrzahl von in radialer Richtung gestapelten, axial orientierten Teilleitern zusammengesetzt sein. Der Stapel von Teilleitern (die ihrerseits stabförmig sein können) kann dann einen mechanisch festen Verbund in Form eines axialen Stabes bilden. Alternativ können die jeweiligen Leiterstäbe aber als Litzenleiter aus einzelnen Leiterdrähten zusammengesetzt sein, wobei der übergeordnete zusammengesetzte Leiter wiederum einen mechanisch eigenstabilen Stab ausbildet. Schließlich ist es auch möglich, dass die einzelnen Teilleiter eines zusammengesetzten Leiterstabes nach Art eines Röbelleiters gegeneinander verdrillt sind, dass sie also zusammen einen Röbelstab ausbilden. Allgemein können die verschiedenen Ausgestaltungen der zusammengesetzten Leiterstäbe vor allem in Bezug auf ihre geringeren Wechselstromverluste vorteilhaft sein. Auch bei den Ausführungsvarianten mit geteilten Leiterstäben können die einzelnen Teilleiter optional entweder alle oder zum Teil als Hohlleiter ausgeführt sein, um ein fluides Kühlmittel durch solche innenliegenden Kanäle leiten zu können.

Bei der Ausführungsvariante, bei der das additiv gefertigte Anschlusselement zur Verbindung eines Leiterstabes mit einem leistungselektronischen Bauelement dient, ist es allgemein vorteilhaft, wenn jedem der vorhandenen Leiterstäbe ein separates Anschlusselement zugeordnet ist, durch welches der jeweilige Leiterstab mit einem zugehörigen leistungselektronischen Bauelement elektrisch verbunden ist. Hierbei kann insbesondere eine 1:1-Zuordnung von Leiterstäben und Anschlusselementen vorliegen, so dass jedes Anschlusselement genau einen Leiterstab mit der zugehörigen Leistungselektronik verbindet. Diese "zugehörige Leistungselektronik" kann dabei entweder ein oder auch mehrere leistungselektronische Bauelemente umfassen. Bei dieser Ausführungsform kann jeder Leiterstab einem Stang einer Mehrphasen-Wechselstrom-Wicklung entsprechen, und jeder Strang kann dann von einer zugehörigen Leistungselektronik angesteuert bzw. bestromt werden. So kann eine kompakte, hochintegrierte Maschine mit einer hohen Strangzahl zur Verfügung gestellt werden.

Alternativ oder zusätzlich kann aber auch ein additiv gefertigtes Anschlusselement vorliegen, welches mehrere Leiterstäbe untereinander elektrisch verbindet. Gemäß einer vorteilhaften Weiterbildung dieser Variante kann wenigstens ein solches Anschlusselement als Kurzschlussring ausgebildet sein, welcher eine Mehrzahl von Leiterstäben elektrisch miteinander verbindet. Dieser Kurzschlussring kann insbesondere an dem axialen Ende angeordnet sein, welches der Seite mit den leistungselektronischen Bauelementen gegenüberliegt. Der Kurzschlussring kann einen Sternpunkt der Statorwicklung ausbilden.

Gemäß einer vorteilhaften Ausführungsform des Herstellungsverfahrens kann die Herstellung des Anschlusselements in Schritt a) durch ein pulverbettbasiertes Verfahren, insbesondere durch selektives Laserschmelzen, erfolgen. Diese Ausführungsform des Verfahrens ist vor allem für die Herstellung von Anschlusselementen vorteilhaft, die der Verbindung der einzelnen Leiterstäbe mit leistungselektronischen Bauelementen dienen. Mit diesem Verfahren sind sehr hohe elektrische Leitfähigkeiten von metallischen Materialien erzielbar. Außerdem können hiermit auch vergleichsweise filigrane Strukturen im Millimeter- oder Sub-Millimeter-Bereich erzeugt werden, beispielsweise mit Strukturgrößen unterhalb von 0,5 mm. Somit wird eine komplexe Formgebung des wenigstens einen Anschlusselements ermöglicht, die beispielsweis für die Integration eines oder mehrerer Kühlmittelkanäle in das jeweilige Anschlusselement genutzt werden kann.

Gemäß einer alternativen vorteilhaften Ausführungsform des Herstellungsverfahrens kann die Herstellung des Anschlusselements in Schritt a) durch Kaltgasspritzen erfolgen. Auch mit Kaltgasspritzen können sehr hohe spezifische Leitfähigkeiten von metallischen Materialien erreicht werden. Außerdem können mit diesem Verfahren sehr hohe Auftragsraten erreicht werden, beispielsweise Auftragsraten von einigen Kilogramm pro Stunde. Auf diese Weise können Anschlusselemente mit vergleichsweise großen Abmessungen erzeugt werden, was vor allem für die Realisierung eines Kurzschlussrings vorteilhaft ist. So kann die größte Außenabmessung eines solchen Anschlusselements beispielsweise 0,5 m oder mehr betragen und sich insbesondere über den gesamten Umfang des Stators erstrecken. Gemäß einer besonders vorteilhaften Ausführungsform des Verfahrens kann während der additiven Herstellung des Anschlusselements in Schritt a) gleichzeitig auch die Anbindung dieses Anschlusselements an die Leiterstäbe erfolgen. Mit anderen Worten kann das Anschlusselement *in situ* an den Leiterstab bzw. die Mehrzahl von Leiterstäben angedruckt werden. Auf diese Weise kann prinzipiell sowohl die Anbindung an die Leistungselektronik als auch ein die Leiterstäbe verbindendes Anschlusselement *in situ* an die Stabenden der bereits in die Nuten eingelegten Leiterstäbe während der additiven Herstellung erfolgen. Dies ermöglicht eine besonders einfache Herstellung, und die stoffschlüssige Verbindung zwischen Leiterstab und Anschlusselement wird bereits im Moment der Entstehung des Anschlusselements geschaffen. Damit kann für diese Verbindung auch ein besonders niedriger Übergangswiderstand erreicht werden. Die gegebenenfalls nötige nachträgliche Verbindung des Anschlusselements mit der Leistungselektronik kann dann durch herkömmliche Methoden erfolgen, also beispielsweise durch Klemm- oder Lötverbindungen, wobei auch weitere Zwischenelemente denkbar sind wie zum Beispiel eine Platine, auf der ein oder mehrere leistungselektronische Bauelemente angeordnet sind.

Alternativ zu der oben beschriebenen in-situ-Herstellung kann das Anschlusselement prinzipiell aber auch als vorgefertigtes Bauteil durch additive Fertigung erzeugt werden und dann anschließend in einem Schritt b) mit den Leiterstäben verbunden werden. Bei diesem Schritt b) können die Leiterstäbe wiederum bereits in die Nuten des Statorblechpakets eingeführt sein. Die elektrisch leitfähige Verbindung zwischen dem jeweiligen Leiterstab und dem zugeordneten Anschlusselement kann dann auch beispielsweise durch Anlöten oder Anschweißen erfolgen.

Nachfolgend wird die Erfindung anhand einiger bevorzugter Ausführungsbeispiele unter Bezugnahme auf die angehängten Zeichnungen beschrieben, in denen:
- Figur 1: einen schematischen Längsschnitt einer elektrischen Maschine zeigt,
- Figur 2: eine Explosionszeichnung eines Stators zeigt,
- Figur 3: eine Detailansicht im Endbereich eines Leiterstabs zeigt,
- Figur 4: einen Endbereich eines einzelnen Leiterstabs zeigt und
- Figur 5: einen Längsschnitt im Bereich des Übergangs zwischen einem Leiterstab und einem Anschlusselement zeigt.

In den Figuren sind gleiche oder funktionsgleiche Elemente mit gleichen Bezugszeichen versehen.

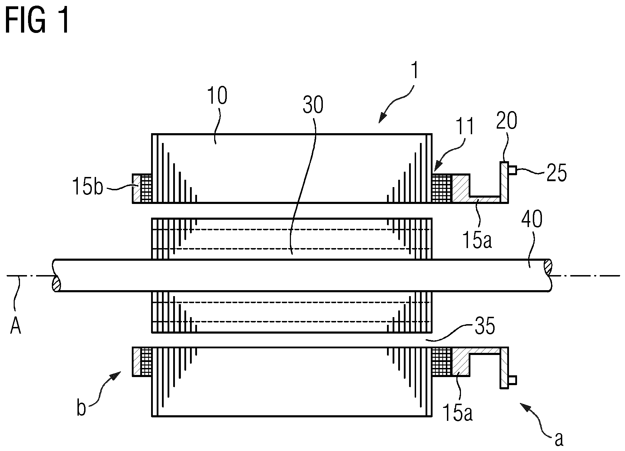

In Figur 1 ist eine elektrische Maschine 1 nach einem ersten Beispiel der Erfindung im schematischen Längsschnitt entlang der zentralen Achse A der Maschine gezeigt. Die Maschine 1 umfasst einen feststehenden Stator 10 und einen um die zentrale Achse A drehbar gelagerten Rotor 30. Der Rotor 30 wird von einer drehbaren Rotorwelle 40 getragen und umfasst eine hier nicht näher gekennzeichnete Erregerwicklung, die beispielsweise in die Nuten eines Rotorblechpakets eingebettet sein kann. Die Rotorwicklung tritt über den Luftspalt 35 hinweg in elektromagnetische Wechselwirkung mit der Statorwicklung 11, welche im radial innenliegenden Bereich des Stators 10 angeordnet ist. Diese Statorwicklung 11 ist aus einzelnen Leiterstäben zusammengesetzt, wie im Zusammenhang mit den folgenden Figuren noch näher erläutert wird. Diese Leiterstäbe sind in die Nuten eines Statorblechpakets eingebettet. In den axialen Endbereichen a und b der Statorwicklung 11 sind diese Leiterstäbe elektrisch kontaktiert bzw. miteinander zu einer übergeordneten Wicklung elektrisch verbunden. So ist im ersten axialen Endbereich a jeder Leiterstab mit einem ersten Anschlusselement 15a und über dieses mit einer zugehörigen Leistungselektronik verbunden. Das Anschlusselement 15a verbindet den zugehörigen Leiterstab mit den Anschlussstellen einer Platine 20, welche wiederum ein oder mehrere leistungselektronische Bauelemente 25 trägt. Nur eines hiervon ist in Figur beispielhaft dargestellt. Beispielsweise kann es sich dabei um einen Umrichter handeln. Über den gesamten Umfang des Stators 1 gesehen können mehrere derartige Platinen vorliegen (beispielsweise eine pro Statorstab), oder aber es kann sich prinzipiell auch um eine zusammenhängende, ringförmige Platine handeln. Wesentlich ist nur, dass die elektrische Verbindung zur zugehörigen Leistungselektronik durch das Anschlusselement 15a vermittelt ist. Dieses Anschlusselement 15a ist durch additive Fertigung hergestellt, beispielsweise durch selektives Laserschmelzen.

Im gegenüberliegenden, zweiten axialen Endbereich b sind die einzelnen Statorstäbe durch einen Kurzschlussring 15b elektrisch miteinander verbunden. Bei diesem Kurzschlussring handelt es sich um ein zweites Anschlusselement, welches ebenfalls aus einem elektrisch leitfähigen Material additiv gefertigt ist. Der Kurzschlussring kann beispielsweise die Form eines flachen, kreisförmigen Scheibenrings haben, der die Leiterstäbe auf allen Umfangspositionen elektrisch miteinander verbindet. Somit erstreckt sich dieser Ring über den gesamten Umfang des Stators 1 und kann entsprechend relativ große Abmessungen aufweisen. Durch das additive Fertigungsverfahren kann dieser Ring trotzdem aus einem Stück gefertigt sein, beispielsweise mit dem Verfahren des Kaltgasspritzens. Durch die elektrische Verbindung mittels des Kurzschlussrings 15b kann insbesondere eine Sternpunktschaltung in der Statorwicklung 11 realisiert werden.

Bei dem Ausführungsbeispiel der Figur 1 ist jeder Leiterstab der Statorwicklung 11 in beiden axialen Endbereichen a und b mit einem additiv gefertigten Anschlusselement 15a bzw. 15b elektrisch kontaktiert. Dies ist jedoch nicht zwingend erforderlich. Vielmehr kann auch nur in einem dieser beiden Endbereiche eine Verbindung durch ein additiv gefertigtes Anschlusselement vorliegen - also beispielsweise eine Verbindung mit leistungselektronischen Bauelementen im ersten Endbereich a oder eine ringförmige (oder auch anderweitig ausgeformte) Verbindung der einzelnen Leiterstäbe untereinander im gegenüberliegenden Endbereich b.

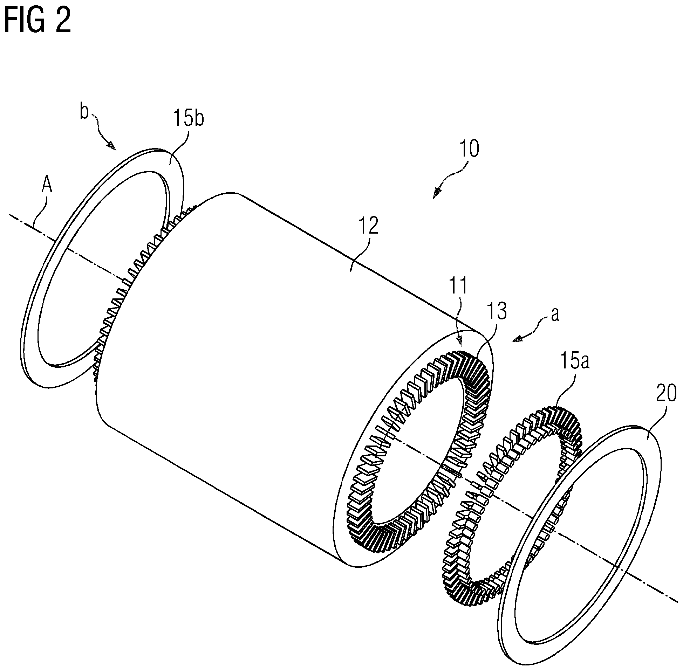

Figur 2 zeigt einen Stator 10 für eine solche elektrischen Maschine in schematischer Explosionszeichnung. Diese Darstellung dient aber nur der Übersichtlichkeit und soll nicht implizieren, dass der Stator in dieser Weise aus vorgefertigten Bauteilen zusammengesetzt wird. Stattdessen können bestimmte Elemente, insbesondere die Anschlusselemente auch *in situ* erzeugt werden. Der Stator 10 kann dabei insbesondere ähnlich aufgebaut sein wie der Stator der Figur 1. Wie in der perspektivischen Ansicht erkennbar, sind hier eine Vielzahl einzelner Leiterstäbe 13 in zugehörige Nuten 12a des Statorblechpakets 12 eingebettet. Dabei ist jede Nut 12a durch genau einen Leiterstab 13 ausgefüllt. Die Vielzahl von einzelnen Leiterstäben 13 ist im ersten axialen Endbereich a mit einer entsprechenden Vielzahl von ersten Anschlusselementen 15a elektrisch verbunden. Jedem Leiterstab 13 der Wicklung 11 ist also auf dieser Seite genau ein solches Anschlusselement 15a zugeordnet. Die einzelnen Anschlusselemente 15a sind beispielsweise aus Kupfer gebildet. Sie können mit einem additiven Fertigungsverfahren direkt an die in die Nuten eingelegten Leiterstäbe 13 angedruckt worden sein. Alternativ können sie aber auch als vorgefertigte Bauteile gebildet sein und dann nachträglich mit den Stäben verbunden worden sein. Die einzelnen Anschlusselemente 15a sind hier L-förmig ausgestaltet, wobei jeweils ein Schenkel des Ls bündig an den zugeordneten Leiterstab anschließt und sich der andere Schenkel in axialer Richtung von der Statorwicklung 11 weg erstreckt. Über diesen zweiten, axial orientierten Schenkel wird die Anbindung an die axial von der Statorwicklung beabstandete Platine 20 realisiert, welche die zugehörige Leistungselektronik trägt. Dabei kann jedem Leiterstab 13 und entsprechend jedem Anschlusselement 15a ein Umfangssegment einer insgesamt ringförmigen Anordnung von einer entsprechenden Anzahl solcher Platinen 20 zugeordnet sein.

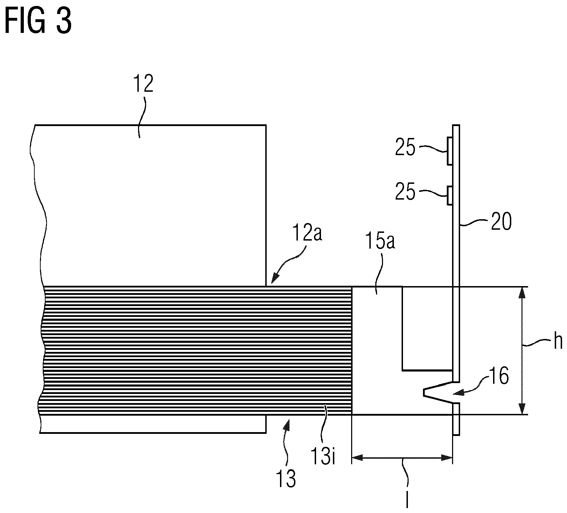

Figur 3 zeigt eine Detailansicht im Bereich des ersten axialen Endes eines Leiterstabes 13 aus dem Stator der Figur 2 in schematischem Längsschnitt. Hier ist zu erkennen, wie der Leiterstab 13 in axialer Richtung aus der zugehörigen Nut 12a des Statorblechpakets herausragt. Der Leiterstab ist in diesem Beispiel aus einer Vielzahl von Teilleitern 13i zusammengesetzt, wobei zwischen den einzelnen Teilleitern eine optionale Zwischenleiterisolation vorliegen kann. Alternativ kann der Leiterstab aber auch z.B. aus einem einstückigen Massivleiter gebildet sein.

Der Leiterstab 13 ist an seinem axialen Ende direkt mit dem zugehörigen ersten Anschlusselement 15a verbunden. In radialer Richtung entspricht die Höhe h dieses Anschlusselements der radialen Höhe des damit verbundenen Leiterstabs. In axialer Richtung ist die Länge l des Anschlusselements 15a so dimensioniert, dass der axiale Abstand der Platine 20 von dem Leiterstab überbrückt werden kann. Dier hier nicht dargestellte Breite b in azimutaler Richtung kann ausreichend hoch gewählt sein, dass sich insgesamt ein vergleichsweise niedriger Kopplungswiderstand ergibt, wobei das additiv aufgebaute elektrisch leitfähige Material des Anschlusselements eine spezifische Leitfähigkeit von beispielsweise wenigstens 50 MS/m aufweisen kann.

Das Anschlusselement 15a ist in seinem rechts dargestellten axialen Endbereich mit einer optionalen Ausnehmung 16 versehen. Hier kann eine mechanische Befestigung mit der Platine 20 und/oder eine thermische Ankopplung an ein Kühlsystem erfolgen.

Wie in der Explosionszeichnung der Figur 2 erkennbar, sind alle Leiterstäbe 13 im zweiten axialen Endbereich durch einen kreisscheibenförmigen Kurzschlussring 15b elektrisch miteinander verbunden. Auch dieser kann durch additive Fertigung direkt an die entsprechenden axialen Endbereiche der Leiterstäbe 13 angedruckt worden sein.

Insgesamt ist bei dem Beispiel der Figuren 2 und 3 ein hochintegrierter Stator 10 für eine elektrische Maschine realisiert, bei dem die leistungselektronischen Bauelemente 25 Teil des Stators sind und sehr dicht an der Statorwicklung angeordnet sind. Der Abstand zwischen den einzelnen leistungselektronischen Bauelementen 25 und der Statorwicklung 11 in einem solchen integrierten Stator kann beispielsweise allgemein unterhalb von 20 cm liegen. Die Statorwicklung 11 (und entsprechend die leistungselektronischen Bauelemente 25) kann dazu ausgelegt sein, bei einem vergleichsweise hohen Strom und vergleichsweise niedriger Spannung betrieben zu werden. In diesem Zusammenhang ist die vergleichsweise nahe Anbindung der Leistungselektronik vorteilhaft, da über die kurze Entfernung auch mit einem additiv gefertigten Anschlusselement ein ausreichend niedriger Kopplungswiderstand und eine ausreichend hohe Strombelastbarkeit realisiert werden können. Auf eine aufwändige Isolation der Leiterstäbe 11 und der jeweiligen Anschlusselemente 15a bzw. 15b kann aufgrund des verhältnismäßig niedrigen Spannungsbereichs verzichtet werden.

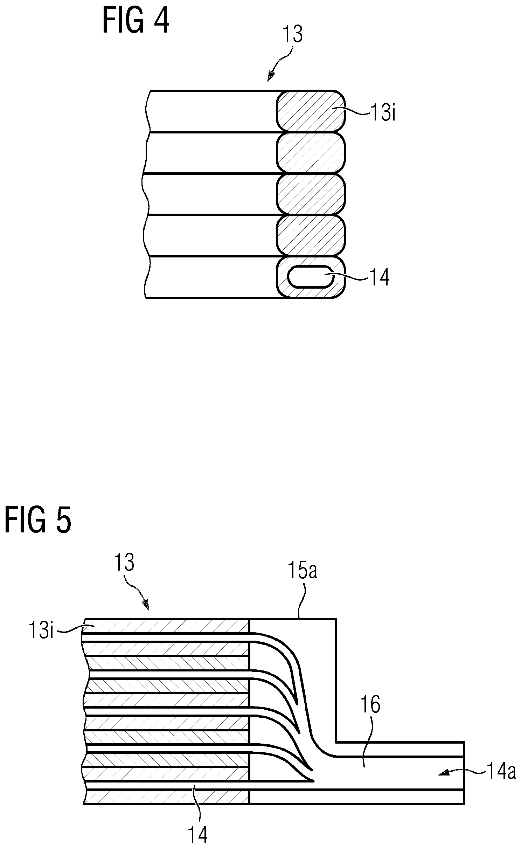

In Figur 4 ist eine schematische perspektivische Darstellung eines axialen Endbereichs eines weiteren beispielhaften Leiterstabs 13 aus einem ähnlichen Stator gezeigt. Auch hier ist der Leiterstab 13 nach Art eines geteilten Leiters aus einer Mehrzahl von Teilleitern 13i zusammengesetzt, beispielsweise einzelnen Teilleitern aus Kupfer. Jeder Teilleiter hat eine etwa rechteckige Querschnittsform mit abgerundeten Ecken. Im gezeigten Beispiel handelt es sich um fünf Teilleiter 13i pro Leiterstab 13, wobei die Anzahl der Teilleiter in einer praktischen Umsetzung auch kleiner oder größer gewählt sein kann. Nur beispielhaft ist in Figur 4 der unterste Teilleiter hohl dargestellt, um zu illustrieren, dass die einzelnen Teilleiter 13i (oder auch ein einstückiger Leiterstab im Ganzen) prinzipiell als Hohlleiter ausgebildet sein können. Im Inneren dieses Teilleiters ist entsprechend ein Kühlmittelkanal 14 angeordnet, in welchem Kühlmittel zur Kühlung der Statorwicklung 11 zirkuliert werden kann. Es können auch mehrere und insbesondere alle Teilleiter 13i als Hohlleiter ausgestaltet sein, um eine effiziente Kühlung der Wicklung zu ermöglichen.

Figur 5 zeigt eine Ausführungsform eines Leiterstabs 13 aus fünf einzelnen Teilleitern 13i im schematischen Längsschnitt. Hier sind alle fünf Teilleiter 13i als Hohlleiter mit entsprechenden innenliegenden Kühlmittelkanälen 14 ausgebildet. Im dargestellten axialen Endbereich ist dieser Leiterstab wiederum mit einem L-förmigen additiv gefertigten Anschlusselement 15a zur Anbindung an die Leistungselektronik verbunden. Auch dieses additiv gefertigte Anschlusselement 15a ist mit einem innenliegenden Kanalsystem in Form einer komplex geformten Ausnehmung 16 ausgestaltet. Dieses Kanalsystem ist mit den einzelnen Kühlmittelkanälen 14 der einzelnen Teilleiter 13i fluidisch verbunden. Sie weist entsprechend auf der Seite des Leiterstabs fünf einzelne Teilkanäle auf, die gegenüberliegend in einem zentralen Kanal zusammenlaufen. Dieser kann über eine Öffnung 14a mit Kühlmittel gespeist werden, oder es kann Kühlmittel durch diese Öffnung aus dem Kanalsystem ausgeleitet werden. Die Formgebung des Kanalsystems ist nur beispielhaft zu verstehen, und es sind viele andere Formgebungen möglich, bei denen die zentrale Öffnung 14a auch an anderen Stellen des Anschlusselements 15a angeordnet sein kann. Allgemein und unabhängig von der genauen Formgebung ist es ein wesentlicher Vorteil des additiven Fertigungsverfahrens, dass ein Anschlusselement mit innenliegender Kanalstruktur 16 vergleichsweise einfach hergestellt werden kann. So können auch komplexe Strukturen mit einer Vielzahl von verzweigten Teilkanälen hergestellt werden. In analoger Weise kann auch der optional vorhandene Kurzschlussring 15b auf der gegenüberliegenden Seite von einem innenliegenden Kanalsystem zur Einleitung bzw. Ausleitung von Kühlmittel in die bzw. aus der Statorwicklung durchzogen sein.

### Bezugszeichenliste

- 1: elektrische Maschine
- 10: Stator
- 11: Statorwicklung
- 12: Statorblechpaket
- 12a: Nut
- 13: Leiterstab
- 13i: Teilleiter
- 14: Kühlmittelkanal
- 14a: Kanalöffnung
- 15a: Anschlusselement zur Leistungselektronik
- 15b: Kurzschlussring
- 16: Ausnehmung
- 20: Platine
- 25: leistungselektronisches Bauelement
- 30: Rotor
- 35: Luftspalt
- 40: Rotorwelle
- A: zentrale Achse
- a: erstes axiales Ende
- b: zweites axiales Ende
- h: radiale Höhe
- l: axiale Länge

## Patentansprüche

1. Stator (10) für eine elektrische Maschine (1) umfassend
- eine Statorwicklung (11) mit einer Mehrzahl von Leiterstäben (13),
- wenigstens ein leistungselektronisches Bauelement (25), welches in den Stator (10) integriert ist
- und wenigstens ein Anschlusselement (15a,15b), durch welches entweder ein zugeordneter Leiterstab (13) mit einem zugeordneten leistungselektronischen Bauelement (25) elektrisch verbunden ist oder durch welches mehrere Leiterstäbe (13) untereinander elektrisch verbunden sind,
- wobei das Anschlusselement (15a,15b) aus einem elektrisch leitfähigen Material gebildet ist und mit einem additiven Herstellungsverfahren hergestellt ist.

2. Stator (10) nach Anspruch 1, wobei das Anschlusselement (15a,15b) im Wesentlichen aus Kupfer oder einer kupferhaltigen Legierung gebildet ist.

3. Stator (10) nach einem der Ansprüche 1 oder 2, bei welchem das Material des Anschlusselements (15a,15b) eine spezifische Leitfähigkeit von wenigstens 50 MS/m aufweist.

4. Stator (10) nach einem der vorhergehenden Ansprüche, bei welchem das Anschlusselement (15a,15b) eine Strombelastbarkeit von wenigstens 600 A aufweist.

5. Stator (10) nach einem der vorhergehenden Ansprüche, bei welchem das wenigstens eine leistungselektronische Bauelement (25) ein Stromrichter ist.

6. Stator (10) nach Anspruch 5, bei welchem der Stromrichter ein Umrichter ist.

7. Stator (10) nach einem der vorhergehenden Ansprüche, bei welchem die Leiterstäbe (13) jeweils als Massivleiter oder als geteilte Leiter oder als Hohlleiter ausgestaltet sind.

8. Stator (10) nach einem der vorhergehenden Ansprüche, bei welchem jedem Leiterstab (13) ein Anschlusselement (15a) zugeordnet ist, durch welches der Leiterstab (13) mit einem zugehörigen leistungselektronischen Bauelement (25) elektrisch verbunden ist.

9. Stator (10) nach einem der vorhergehenden Ansprüche, bei welchem wenigstens eines der vorhandenen Anschlusselemente (15b) als Kurschlussring ausgebildet ist, welcher eine Mehrzahl von Leiterstäben (13) elektrisch miteinander verbindet.

10. Elektrische Maschine (1) mit einem Stator (10) nach einem der Ansprüche 1 bis 9 sowie einem relativ zu dem Stator (10) drehbar gelagerten Rotor (30).

11. Verfahren zur Herstellung eines Stators (10) für eine elektrische Maschine (1),
- wobei der Stator (10) eine Statorwicklung (11) mit einer Mehrzahl von Leiterstäben (13) aufweist und wenigstens ein leistungselektronisches Bauelement (25) aufweist, welches in den Stator (10) integriert ist
- wobei der Stator (10) außerdem wenigstens ein Anschlusselement (15a,15b) aufweist, durch welches entweder ein zugeordneter Leiterstab (13) mit einem zugeordneten leistungselektronischen Bauelement (25) elektrisch verbunden ist oder durch welches mehrere Leiterstäbe (13) untereinander elektrisch verbunden sind,
- wobei das Verfahren zumindest den folgenden Schritt aufweist:
a) Herstellung des Anschlusselements (15a,15b) durch ein additives Herstellungsverfahren aus einem elektrisch leitfähigen Material.

12. Verfahren nach Anspruch 11, bei welchem die Herstellung des Anschlusselements (15a,15b) in Schritt a) durch ein pulverbettbasiertes Verfahren, insbesondere durch selektives Laserschmelzen, erfolgt.

13. Verfahren nach Anspruch 11, bei welchem die Herstellung des Anschlusselements (15a,15b) in Schritt a) durch Kaltgasspritzen erfolgt.

14. Verfahren nach einem der Ansprüche 11 bis 13, bei welchem während der additiven Herstellung des Anschlusselements (15a,15b) in Schritt a) gleichzeitig eine Anbindung dieses Anschlusselements an den Leiterstab (13) bzw. die Leiterstäbe (13) erfolgt.

15. Verfahren nach einem der Ansprüche 11 bis 13, bei welchem in Schritt a) das Anschlusselement (15a,15b) als vorgefertigtes Bauteil erzeugt wird, wobei das Verfahren den nachfolgenden Schritt umfasst:
b) Verbinden des vorgefertigten Anschlusselements (15a,15b) mit dem Leiterstab (13) bzw. den Leiterstäben (13).
